# EUROPÄISCHE PATENTSCHRIFT

(11) **EP 4 146 922 B1**
(45) Veröffentlichungstag und Bekanntmachung des Hinweises auf die Patenterteilung: **19.07.2023**
(21) Anmeldenummer: 21806946.6
(22) Anmeldetag: 05.11.2021
(51) Int. Cl.: F02B 19/10, F02B 19/12, H01T 13/40, H01T 13/54, F02D 35/02, F02P 13/00, F02P 19/02, G01L 23/08

(54) **VORKAMMERZÜNDKERZE**
PRECHAMBER SPARK PLUG
BOUGIE D'ALLUMAGE À PRÉCHAMBRE

(30) Priorität: 05.11.2020 AT 509522020
(43) Veröffentlichungstag der Anmeldung: 15.03.2023
(73) Patentinhaber: Piezocryst Advanced Sensorics GmbH, 8020 Graz (AT)
(72) Erfinder: BAUMGARTNER, Martin, 8522 GROSS ST. FLORIAN (AT); MILOSEVIC, Igor, 8101 GRATKORN (AT); KROEGER, Dietmar, 8010 GRAZ (AT)
(74) Vertreter: Babeluk, Michael
(86) Internationale Anmeldenummer: PCT/AT2021/060406
(87) Internationale Veröffentlichungsnummer: WO 2022/094642

(56) Entgegenhaltungen:
- EP-A1- 2 525 452
- EP-A1- 3 358 686
- EP-A2- 1 199 551
- CN-U- 214 170 667
- DE-A1-102019 101 422
- US-A1- 2015 059 456

## Beschreibung

Die Erfindung betrifft eine Vorkammerzündkerze geeignet für den Einsatz in einem Brennraum einer Verbrennungskraftmaschine, mit einer Vorkammer, die beim bestimmungsgemäßen Einsatz über zumindest eine Öffnung in Fluidverbindung mit dem Brennraum steht, wobei in der Vorkammer eine Zündeinrichtung mit zumindest einer Mittelelektrode angeordnet ist, die geeignet ist ein zündfähiges Gemisch zu zünden, wobei weiters in der Vorkammer ein erster Drucksensor angeordnet ist, um einen Druckverlauf in der Vorkammer zu messen.

Sie betrifft auch ein Verfahren zum Betreiben einer Verbrennungskraftmaschine, wobei der Druck in einer Vorkammer einer in einem Brennraum angeordneten Vorkammerzündkerze durch einen ersten Drucksensor der Vorkammerzündkerze gemessen und an eine Maschinensteuerung übermittelt wird und die Maschinensteuerung die Verbrennungskraftmaschine auf Grundlage der erhaltenen Druckdaten des ersten Drucksensors steuert.

Solche Vorkammerzündkerzen werden insbesondere bei stationären, gasbetriebenen Brennkraftmaschinen bei mageren Kraftstoff-Luft-Gemischen eingesetzt. Solche Brennkraftmaschinen sind meist für eine lange Lebensdauer und auch lange Betriebszeiten ausgelegt. Um das Laufverhalten, Kraftstoffverbrauch und Abgasmenge während des Betriebes zu optimieren, ist vorteilhaft, die momentanen Druckverhältnisse in der Vorkammer während des Betriebes zu kennen.

Es ist bekannt, in Verbrennungskraftmaschinen (oder kurz auch Brennkraftmaschinen) Zündkerzen ohne Vorkammer Drucksensoren vorzusehen, die im Zylinderkopf verbaut sind und den Druck im Brennraum messen. Eine solche Zündkerze ist beispielsweise in der US 2008/0218052 A oder der US 4,969,353 A beschrieben. Diese Daten geben Hinweise auf das Verbrennungsverhalten. Diese Sensoren müssen von Anfang an im Zylinderkopf vorgesehen und eingeplant sein, damit entsprechende Kanäle oder Zugangsöffnungen vorgesehen werden. Eine nachträgliche Anordnung in bestehenden Brennkraftmaschinen ist sehr schwierig und aufwändig.

In der DE 10 2013 210 125 A1 wird eine Vorkammerzündkerze offenbart, welche in der Vorkammer einen Drucksensor aufweist. Damit kann der momentane Druck in der Vorkammer gemessen und über die Motorsteuerung Parameter wie Einspritzmenge oder -Zeitpunkt entsprechend angepasst werden. Jedoch beziehen sich diese Informationen nur auf die Verhältnisse in der Vorkammer. Da die Vorkammer mit dem Brennraum meist nur über kleinere Öffnungen verbunden ist, unterscheiden sich die Druckverhältnisse im Brennraum von jenen in der Vorkammer.

Eine solche Vorkammerzündkerze wird auch in der US 2015/059456 A1 offenbart. Dort wird aufgrund des gemessenen Druckverslaufs in der Vorkammer auf die Druckbegebenheiten im Brennraum rückgeschlossen. In der DE 10 2019 101 422 wird ebenso durch einen Drucksensor in der Vorkammer auf die Zustände im Brennraum rückgeschlossen. Dies ist jedoch oft unzureichend genau.

Aufgabe der Erfindung ist damit, eine Vorkammerzündkerze bereitzustellen, welche eine verbesserte Informationsbereitstellung zur Motorsteuerung bereitstellt, die kostengünstig und einfach bei bestehenden Brennkraftmaschinen nachrüstbar ist.

Diese Aufgabe wird erfindungsgemäß dadurch gelöst, dass die Vorkammerzündkerze einen zweiten Drucksensor aufweist, der geeignet ist, einen Druckverlauf im Brennraum zu messen.

Diese Aufgabe wird auch dadurch gelöst, dass der Druck in dem Brennraum durch einen zweiten Drucksensor der Vorkammerzündkerze gemessen wird, an die Maschinensteuerung übermittelt wird und die Maschinensteuerung die Verbrennungskraftmaschine auf Grundlage der erhaltenen Druckdaten des zweiten Drucksensors steuert.

Durch die Messung des Drucks in der Vorkammer und dem Brennraum werden alle wesentlichen Druckwerte durch nur einen Teil im Zylinder, der Vorkammerzündkerze, gemessen. Damit kann die Brennkraftmaschine optimal auf die momentanen Druckbedingungen reagieren und eingestellt werden. Die Anordnung beider Drucksensoren auf der Vorkammerzündkerze ist dabei besonders vorteilhaft, da dies eine besonders kleine Ausführung ermöglicht und bestehende Brennkraftmaschinen so durch Einsatz einer derartigen Vorkammerzündkerze nachgerüstet werden können. Ein größerer Umbau des Zylinders ist dabei nicht notwendig, es muss lediglich die bestehende Zündkerze ausgebaut und eine erfindungsgemäße eingesetzt werden.

Vorzugsweise ist zumindest der erste und/oder der zweite Drucksensor als piezoelektrischer, piezoresistiver, kapazitiver oder optischer Drucksensor ausgeführt.

Der zweite Drucksensor ist vorzugsweise auf einer dem Brennraum zugewandten Außenwand der Vorkammerzündkerze angeordnet. Vorzugsweise liegt eine Messfläche des zweiten Drucksensors in bestimmungsgemäßer Einbaulage im Brennraum.

Dabei ist der erste Drucksensor vorzugsweise azentrisch zur Längsachse der Vorkammerzündkerze angeordnet.

Vorzugsweise ist die Mittelelektrode entlang der Längsachse angeordnet.

Die Mittelektrode dient zur Entzündung des Gemisches in der Vorkammer und dadurch in weiterer Folge im Brennraum. Sie kann als klassische elektrische Elektrode zur Erzeugung einer elektrischen Entladung, die das Gasgemisch entzündet, ausgeführt sein. Dazu kann zumindest eine Masseelektrode vorgesehen sein, die zur Mittelelektrode beabstandet angeordnet ist.

Die Mittelelektrode kann auch als Corona-Zünd-Elektrode zur Bereitstellung einer Corona-Zündung, also einer Hochfrequenz-Zündung, ausgebildet sein.

In einer weiteren Ausführungsform kann die Vorkammerzündkerze als Surface-Discharge-Ignition-Vorkammerzündkerze ausgebildet sein. Dazu kann sich zumindest eine, vorzugsweise ringförmige, Masseelektrode in etwa auf Höhe der Mittelektrode befinden, wobei eine elektrisch isolierende Oberfläche knapp unterhalb der Masse- und Mittelelektrode zwischen den beiden Elektroden angeordnet sein kann und vorzugsweise die beiden Elektroden miteinander verbindet.

Weiters kann die Vorkammerzündkerze dazu ausgebildet sein, Laserzündungen auszuführen. Dabei ist ein Lasergenerator vorgesehen, der einen Laserstrahl erzeugt, der in der Lage ist, das Gasgemisch zu entzünden. Im Rahmen der vorliegenden Erfindung soll der Begriff Mittelelektrode in Zusammenhang mit einer solchen Laser-Vorkammerzündkerze den Lichtleiter bezeichnen, der den Lasergenerator mit der Vorkammer verbindet.

Der erste Drucksensor und/oder der zweite Drucksensor sind dabei mit der Vorkammerzündkerze vorzugsweise verklebt oder anders stoffschlüssig verbunden. Alternativ kann sie auch formschlüssig mit der Vorkammerzündkerze verbunden sein.

Vorzugsweise ist die Verbindung zwischen der Vorkammerzündkerze und dem ersten und/oder dem zweiten Drucksensor über zumindest ein Dichtelement abgedichtet.

Vorzugsweise ist vorgesehen, dass die Vorkammer oder ein Teil der Vorkammer mit der Vorkammerzündkerze über zumindest eine formschlüssige, kraftschlüssige und/oder zumindest eine stoffschlüssige Verbindung verbunden ist und vorzugsweise verschraubt, verklebt aufgepresst, eingepresst, angeschweißt und/oder über zumindest eine Schnappverbindung verbunden ist. Mit anderen Worten ist vorzugsweise zumindest ein Teil des die Vorkammer bildenden Mantels an der Zündkerze angeordnet und vorzugsweise mit ihr in der beschriebenen Weise verbunden. Dabei weist die Vorkammer vorzugsweise eine Vorkammerkappe auf, welche der Vorkammerzündkerze gegenübersteht. Damit ragt in der Regel die Vorkammerkappe am tiefsten in den Brennraum hinein. Dies ermöglicht das leichte Adaptieren der Vorkammer zwischen den Verwendungen. Dazu muss die Vorkammerzündkerze in der Regel aus der Brennkraftmaschine entfernt werden, die Vorkammer oder ein Teil der Vorkammer ausgetauscht und die Vorkammerzündkerze wieder eingebaut werden. Liegt eine Schweißverbindung vor, so kann die Schweißnaht geöffnet und das Teil ausgetauscht werden.

Unter einer formschlüssigen Verbindung wird in der Verbindungstechnik allgemein eine Verbindung zwischen zumindest zwei Teilen verstanden, welche sich gegenseitig auf Grund ihrer geometrischen Verhältnisse, also beispielsweise einer zueinander passenden Form und/oder Anordnung, in der Bewegung zueinander in zumindest einen Freiheitsgrad hemmen, also beispielsweise eine Nut-Feder-Verbindung oder eine Passverzahnung.

Unter einer kraftschlüssigen Verbindung wird eine Verbindung verstanden, bei der eine Bewegung von zumindest zwei Teilen zueinander durch ein Kraftfeld durch Reibungskräfte verhindert wird. Beispielsweise kann eine solche Verbindung mittels einer Klemmschraube erfolgen.

Unter stoffschlüssig wird eine Verbindung verstanden, bei der zumindest zwei Teile durch atomare oder molekulare Kräfte zusammengehalten werden, also beispielsweise Schweiß- oder Klebeverbindungen.

Weiters kann vorgesehen sein, dass die Vorkammerzündkerze eine aktive Heizeinrichtung aufweist, welche zumindest ein, vorzugsweise elektrisch betreibbares, Heizelement umfasst und dass das Heizelement vorzugsweise in der Vorkammer angeordnet ist. Damit kann die Temperatur und damit die Druckverhältnisse in der Vorkammer eingestellt werden.

Um weitere Informationen über den derzeitigen Zustand und den Verbrennungsverlauf zu sammeln ist vorteilhaft, wenn die Vorkammerzündkerze in der Vorkammer einen Temperatursensor umfasst, wobei der Temperatursensor vorzugsweise optisch ist und/oder vorzugsweise auf eine Vorkammerkappe der Vorkammer gerichtet ist. Ist der Temperatursensor auf die Vorkammerkappe gerichtet, so kann die Temperatur besonders akkurat gemessen werden. Insbesondere, wenn der Temperatursensor ein optischer ist, welcher die Temperatur einer Oberfläche misst, ist dies sinnvoll. Dies gilt auch, wenn vorgesehen ist, dass die Temperatur in der Vorkammer durch einen Temperatursensor der Vorkammerzündkerze gemessen und an die Maschinensteuerung übermittelt wird.

Besonders vorteilhaft ist, wenn die Vorkammerzündkerze einen Zufuhrkanal für Brenngas in die Vorkammer aufweist. Brenngas kann dabei ein Gemisch mit Luft und Brennstoff sein, oder auch nur eines der beiden.

Um eine Störung des Temperatursensors während der Einspritzung durch den Zufuhrkanal möglichst gering zu halten ist vorteilhaft, wenn der Zufuhrkanal und der Temperatursensor in einem Schnitt quer zu einer Längsachse der Vorkammerzündkerze an gegenüberliegenden Seiten der Vorkammerzündkerze angeordnet sind.

Es kann vorgesehen sein, dass der erste Drucksensor entlang einer Längsachse der Vorkammerzündkerze weiter von der Vorkammer entfernt ist als zumindest eine Mittelelektrode der Vorkammerzündkerze. Sind beide in der Vorkammer angeordnet, so ist damit gemeint, dass die Mittelelektrode entlang der Längsachse in Richtung der Vorkammer von der Vorkammerzündkerze aus gesehen weiter entfernt ist, als der erste Drucksensor. Die Mittelelektrode steht also tiefer in die Vorkammer hinein als der erste Drucksensor. Damit kann erreicht werden, dass der erste Drucksensor etwas abseits des Entzündungsortes liegt und etwas geschützter von ihr ist.

Weiters kann ein Schutz des Drucksensors erreicht werden, wenn vorgesehen ist, dass der erste Drucksensor in einer Ausnehmung der Vorkammerzündkerze angeordnet ist, welche in Strömungsverbindung mit der Vorkammer steht. Die Ausnehmung kann von der Vorkammer im Wesentlichen abgeschlossen sein und nur über ein oder wenige Kanäle oder Öffnungen mit ihr strömungsverbunden sein. Damit ist die Druckmessung noch gut möglich, der Drucksensor ist aber beispielsweise vor hohen Temperaturen besser geschützt.

Weiters kann vorgesehen sein, dass die Ausnehmung länglich ausgeführt ist und parallel zur Längsachse oder in einem Winkel von mindestens 30°, vorzugsweise zwischen 35° und 60° zur Längsachse steht. Mit länglich ist dabei gemeint, dass die längste Erstreckung der Ausnehmung im Schnitt entlang einer Hauptachse verläuft. Dabei ist diese Hauptachse parallel zur Längsachse der Vorkammerzündkerze, oder steht in einem Winkel von mindestens 30°, vorzugsweise zwischen 35° und 60° und besonders vorzugsweise 45°.

Vorzugsweise steht zumindest der erste Drucksensor und/oder der zweite Drucksensor im Wesentlichen parallel zur Längsachse der Vorkammerzündkerze. Damit ist gemeint, dass zumindest ein Messpunkt des Drucksensors, der den Druck in seiner Umgebung misst, quer zu Längsachse steht. In den meisten Fällen ist der Messpunkt als Messoberfläche ausgeführt.

Es kann aber auch vorgesehen sein, dass der erste und/oder der zweite Drucksensor geneigt zu einer Längsachse der Vorkammerzündkerze steht. Dabei ist der erste und/oder zweite Drucksensor vorzugsweise zum Brennraum hin geneigt.

Des Weiteren kann vorgesehen sein, dass der erste Drucksensor und der zweite Drucksensor in einem Schnitt quer zu einer Längsachse der Vorkammerzündkerze an gegenüberliegenden Seiten der Vorkammerzündkerze angeordnet sind.

In bevorzugten Ausführungen ist vorgesehen, dass zumindest der erste Drucksensor und/oder der zweite Drucksensor optische Drucksensoren sind.

In weiterer Folge wird die Erfindung anhand der in den Figuren gezeigten, nicht einschränkenden erfindungsgemäßen Ausführungsformen erläutert. Es zeigen:
- Fig. 1a: einen Längsschnitt einer ersten erfindungsgemäßen Ausführung;
- Fig. 1b: einen Längsschnitt der ersten Ausführung aus Fig. 1a;
- Fig. 1c: einen Querschnitt der ersten Ausführung aus Figs. 1a und 1b;
- Fig. 1d: einen Längsschnitt einer zweiten erfindungsgemäßen Ausführung;
- Fig. 2: einen Längsschnitt einer dritten erfindungsgemäßen Ausführung.

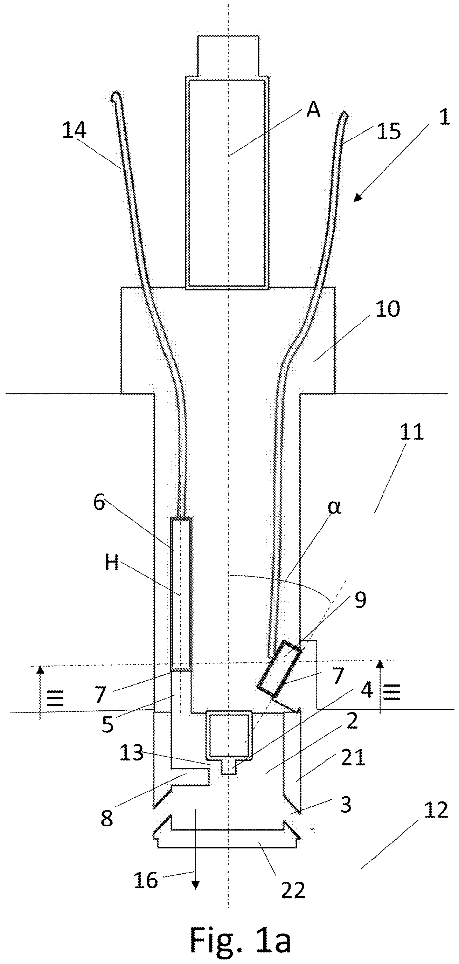

Die erste Ausführungsform einer erfindungsgemäßen Vorkammerzündkerze 1 wie in Figs. 1a bis 1c gezeigt, weist einen länglichen Hauptkörper 10 auf, welcher sich durch einen Zylinderkopf 11 des Zylinders einer Verbrennungskraftmaschine entlang einer Längsachse A erstreckt und in einen Brennraum 12 des Zylinders hineinragt. An ihrer dem Brennraum 12 zugewandtem Ende ist eine Vorkammer 2 angeordnet, welche hauptsächlich durch einen Mantel 21 gebildet wird. Der Mantel 21 umfasst an seinem dem Brennraum 12 zugewandten Ende eine Vorkammerkappe 22. Die Vorkammer 2 ist über mehrere Öffnungen 3 in Form von Überstromkanälen im Mantel 21 der Vorkammerkappe 22 mit dem Brennraum 12 verbunden.

In der dargestellten Ausführung sind vier seitliche Öffnungen 3 vorgesehen, wobei auch Öffnungen an anderen Positionen, beispielsweise zentral angeordnete Öffnungen, vorgesehen sein können. Die Öffnungen 3 sind dabei im Querschnitt quer zur Längsachse A gleichmäßig auf der Vorkammer 2 verteilt und in Bezug zur Hauptachse H in Richtung Brennraum 12 geneigt. Die Vorkammer 2 weist eine im Wesentlichen zylindrische Form auf.

Entlang der Längsachse A erstreckt sich von der Vorkammerzündkerze 1 eine Mittelelektrode 4 in die Vorkammer 2 hinein. Die Mittelelektrode 4 ist dabei im Querschnitt der Vorkammerzündkerze 1 zentral angeordnet und erstreckt sich in etwa bis zur Mitte der Vorkammer 2. Seitlich neben der Mittelelektrode 4 weist die Vorkammerzündkerze 1 eine Ausnehmung 5 auf, welche mit der Vorkammer 2 in Strömungsverbindung steht und sich entlang einer Hauptachse H erstreckt. In der Ausnehmung 5 ist ein erster Drucksensor 6 angeordnet, welcher als länglicher, piezoelektrischer, piezoresistiver, kapazitiver oder auch als optischer Drucksensor ausgeführt ist und mit der Vorkammerzündkerze 1 verklebt ist. Eine Messfläche 7 zeigt in Richtung des Teils der Ausnehmung 5, welche nicht vom ersten Drucksensor 6 gefüllt ist und mit der Vorkammer 2 strömungsverbunden ist. Entlang der Hauptachse H, welche parallel zur Längsachse A steht, ist in etwa auf halber Höhe der Vorkammer 2 eine Masseelektrode 8 angeordnet, welche in Richtung Mittelelektrode 4 zeigt und zusammen mit der Mittelektrode Teil der Zündeinrichtung ist. Es können auch mehrere Masseelektroden vorgesehen sein. Der erste Drucksensor 6 wird über eine im Hauptkörper 10 geführte Leitung 14 versorgt und stellt auch über diese die Messdaten bereit.

Auf der von dem ersten Drucksensor 6 im Längsschnitt gegenüberliegenden Seite der Längsachse A ist ein zweiter Drucksensor 9 angeordnet, welcher außerhalb der Vorkammer 2 liegt. Dieser ist dem Brennraum 12 zugeneigt und der Mittelelektrode 4 weggeneigt. Er weist ebenso eine Messfläche 7 auf, welche zum Brennraum 12 hin gegenüber der Längsachse H in einem Winkel α um etwa 35° geneigt ist. Der zweite Drucksensor 9 ist ebenso mit dem Hauptkörper 10 verklebt, an dessen Außenwand zum Brennraum 12 hin angeordnet, wird über eine im Hauptkörper 10 geführte Leitung 15 versorgt und stellt auch über diese seine Messdaten bereit.

Die Messflächen 7 des ersten und zweiten Drucksensors 6, 9 sind in etwa auf der gleichen Höhe entlang der Längsachse H angeordnet und sind in Richtung 16 zur Vorkammer 2 hin hinter der Mittelelektrode 4 angeordnet.

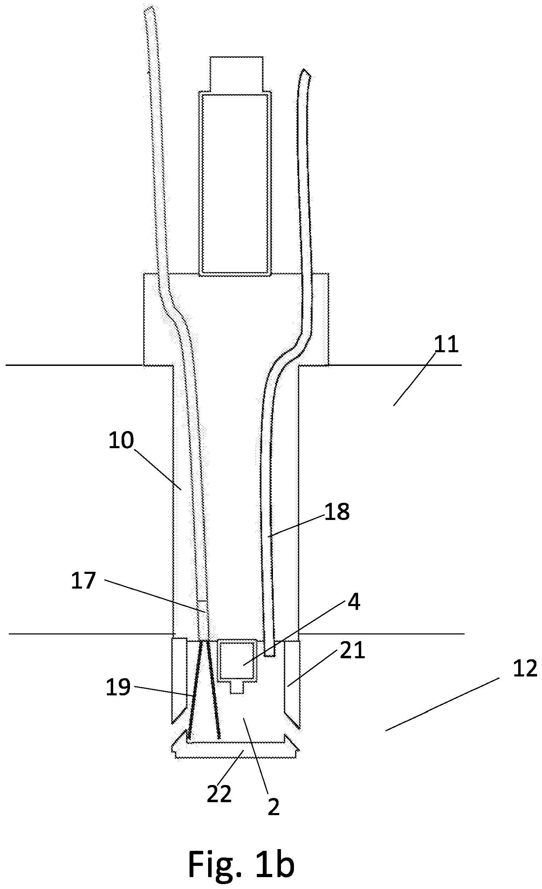

In Fig. 1b ist die gleiche Vorkammerzündkerze 1 ebenso in einem Längsschnitt gezeigt, jedoch um 90° gedreht zur Fig. 1a. In dieser Darstellung ist sichtbar, dass auf einer Seite der Längsachse A ein optischer Temperatursensor 17 angeordnet ist, welcher auf die Vorkammerkappe 22 gerichtet ist. Ein Messkegel 19 deutet dies an. Auf der gegenüberliegenden Seite der Längsachse H ist ein Zufuhrkanal 18 zur Zufuhr von Brenngas in die Vorkammer 2 angeordnet, welcher in die Vorkammer 2 mündet.

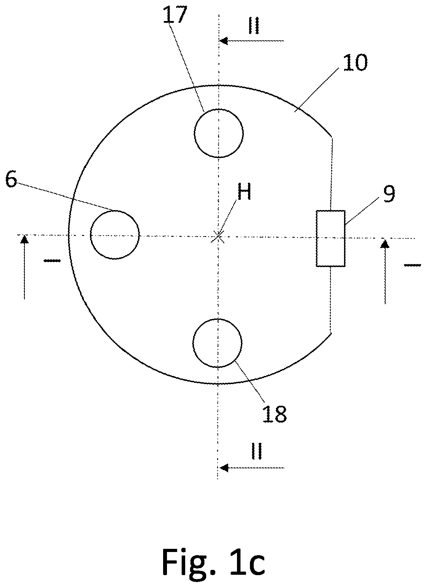

In Fig. 1c ist in einem Querschnitt entlang der Linie III-III aus Fig. 1a sichtbar, dass der erste Drucksensor 6, zweite Drucksensor 9, Temperatursensor 17 und Zufuhrleitung 18 um die Längsachse H herum gleichmäßig angeordnet sind. Der Hauptkörper 10 ist bis auf eine Aussparung im Bereich des zweiten Drucksensors 9 im Wesentlichen kreisförmig. Die Linie I-I zeigt den Schnitt gezeigt in Fig. 1a und die Linie II-II den Schnitt gezeigt in Fig. 1b an.

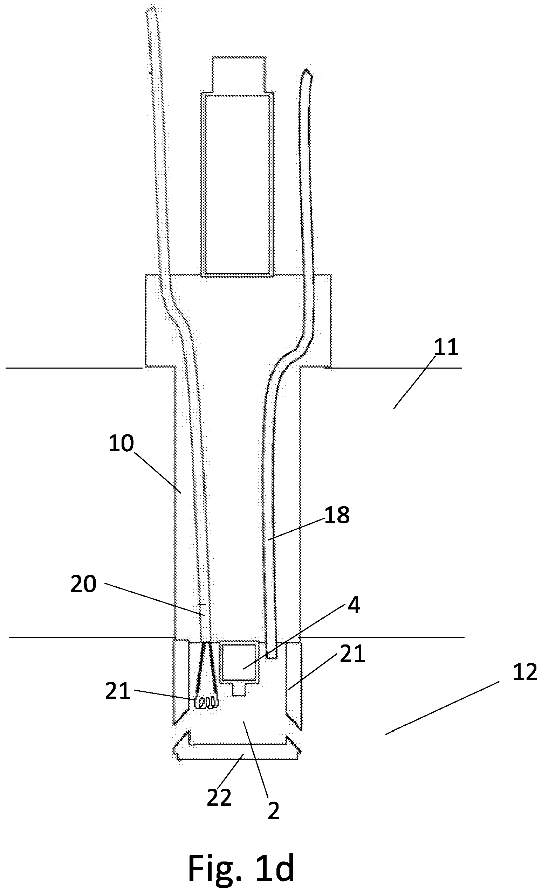

Fig. 1d zeigt eine zweite Ausführungsform in einem Schnitt wie Fig. 1b und weist Ähnlichkeit zur ersten Ausführungsform auf. Daher wird hier nur auf die wichtigsten Unterschiede eingegangen und gleichartige Bauteile mit den gleichen Bezugszeichen gekennzeichnet. Seitlich der Mittelelektrode 4 ist eine aktive, elektrische Heizeinrichtung 20 vorgesehen, welche ein in die Vorkammer 2 hineinragendes Heizelement 21 aufweist. Sie ist im Querschnitt dem Zufuhrkanal 18 gegenüberliegend angeordnet.

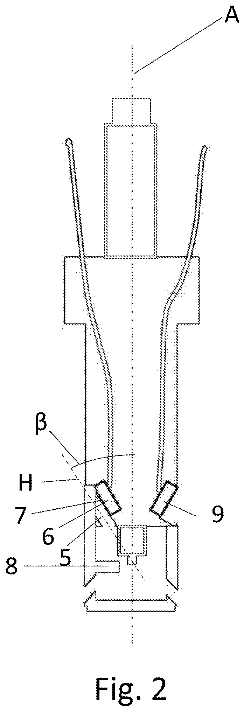

Fig. 2 zeigt eine dritte erfindungsgemäße Ausführungsform ähnlich der ersten. Daher wird hier nur auf die wichtigsten Unterschiede eingegangen. Es ist ein Längsschnitt in einer Stellung wie in Fig. 1a gezeigt. Dabei steht die Hauptachse H der Ausnehmung 5 in einem Winkel β von etwa 35° zur Längsachse A. Die Messfläche 7 des ersten Drucksensors 6 erstreckt sich parallel zur Hauptachse H und ist in Richtung des Brennraums 12 und von der Mittelelektrode 4 weg geneigt.

## Patentansprüche

1. Vorkammerzündkerze (1) geeignet für den Einsatz in einem Brennraum (12) einer Verbrennungskraftmaschine, mit einer Vorkammer (2), die beim bestimmungsgemäßen Einsatz über zumindest eine Öffnung (3) in Fluidverbindung mit dem Brennraum (12) steht, wobei in der Vorkammer (2) eine Zündeinrichtung mit zumindest einer Mittelelektrode (4) angeordnet ist, die geeignet ist ein zündfähiges Gemisch zu zünden, wobei weiters in der Vorkammer (2) ein erster Drucksensor (6) angeordnet ist, um einen Druckverlauf in der Vorkammer (2) zu messen, **dadurch gekennzeichnet, dass** die Vorkammerzündkerze (1) einen zweiten Drucksensor (9) aufweist, der angeordnet ist, einen Druckverlauf im Brennraum (12) zu messen.

2. Vorkammerzündkerze (1) nach Anspruch 1, **dadurch gekennzeichnet, dass** die Vorkammer (2) oder ein Teil der Vorkammer (2) mit der Vorkammerzündkerze (1) über zumindest eine formschlüssige, kraftschlüssige und/oder zumindest eine stoffschlüssige Verbindung verbunden ist und vorzugsweise verschraubt, verklebt aufgepresst, eingepresst, angeschweißt und/oder über zumindest eine Schnappverbindung verbunden ist.

3. Vorkammerzündkerze (1) nach Anspruch 1 oder 2, **dadurch gekennzeichnet, dass** die Vorkammerzündkerze (1) eine aktive Heizeinrichtung (20) aufweist, welche zumindest ein, vorzugsweise elektrisch betreibbares, Heizelement (21) umfasst und dass das Heizelement vorzugsweise in der Vorkammer (2) angeordnet ist.

4. Vorkammerzündkerze (1) nach einem der Ansprüche 1 bis 3, **dadurch gekennzeichnet, dass** die Vorkammerzündkerze (1) in der Vorkammer (2) einen Temperatursensor (17) umfasst, wobei der Temperatursensor (17) vorzugsweise optisch ist und/oder vorzugsweise auf eine Vorkammerkappe (22) der Vorkammer (2) gerichtet ist.

5. Vorkammerzündkerze (1) nach einem der Ansprüche 1 bis 4, **dadurch gekennzeichnet, dass** die Vorkammerzündkerze (1) zumindest einen Zufuhrkanal (18) für Brenngas in die Vorkammer (2) aufweist.

6. Vorkammerzündkerze (1) nach Anspruch 5, **dadurch gekennzeichnet, dass** der Zufuhrkanal (18) und der Temperatursensor (17) in einem Schnitt quer zu einer Längsachse (A) der Vorkammerzündkerze (1) an gegenüberliegenden Seiten der Vorkammerzündkerze (1) angeordnet sind.

7. Vorkammerzündkerze (1) nach einem der Ansprüche 1 bis 6, **dadurch gekennzeichnet, dass** der erste Drucksensor (6) entlang einer Längsachse (A) der Vorkammerzündkerze (1) weiter von der Vorkammer (2) entfernt ist als zumindest eine Mittelelektrode (4) der Vorkammerzündkerze (1).

8. Vorkammerzündkerze (1) nach einem der Ansprüche 1 bis 7, **dadurch gekennzeichnet, dass** der erste Drucksensor (6) in einer Ausnehmung (5) der Vorkammerzündkerze (1) angeordnet ist, welche in Strömungsverbindung mit der Vorkammer (2) steht.

9. Vorkammerzündkerze (1) nach Anspruch 8, **dadurch gekennzeichnet, dass** die Ausnehmung (5) länglich ausgeführt ist und parallel zur Längsachse (A) oder in einem Winkel von mindestens 30°, vorzugsweise zwischen 35° und 60° zur Längsachse (A) steht.

10. Vorkammerzündkerze (1) nach einem der Ansprüche 1 bis 9, **dadurch gekennzeichnet, dass** der erste Drucksensor (6) und/oder der zweite Drucksensor (9) geneigt zu einer Längsachse (A) der Vorkammerzündkerze (1) steht.

11. Vorkammerzündkerze (1) nach einem der Ansprüche 1 bis 10, **dadurch gekennzeichnet, dass** der erste Drucksensor (6) und der zweite Drucksensor (9) in einem Schnitt quer zu einer Längsachse (A) der Vorkammerzündkerze (1) an gegenüberliegenden Seiten der Vorkammerzündkerze (1) angeordnet sind.

12. Vorkammerzündkerze (1) nach einem der Ansprüche 1 bis 11, **dadurch gekennzeichnet, dass** zumindest der erste Drucksensor (6) und/oder der zweite Drucksensor (9) ein piezoelektrischer, piezoresistiver, kapazitiver oder optischer Drucksensor ist.

13. Verfahren zum Betreiben einer Verbrennungskraftmaschine, wobei der Druck in einer Vorkammer (2) einer in einem Brennraum (12) angeordneten Vorkammerzündkerze (1) durch einen ersten Drucksensor (6) der Vorkammerzündkerze (1) gemessen und an eine Maschinensteuerung übermittelt wird und die Maschinensteuerung die Verbrennungskraftmaschine auf Grundlage der erhaltenen Druckdaten des ersten Drucksensors (6) steuert, **dadurch gekennzeichnet, dass** der Druck in dem Brennraum (12) durch einen zweiten Drucksensor (9) der Vorkammerzündkerze (1) gemessen wird, an die Maschinensteuerung übermittelt wird und die Maschinensteuerung die Verbrennungskraftmaschine auf Grundlage der erhaltenen Druckdaten des zweiten Drucksensors (9) steuert.

14. Verfahren nach Anspruch 13, **dadurch gekennzeichnet, dass** die Temperatur in der Vorkammer durch einen Temperatursensor (17) der Vorkammerzündkerze (1) gemessen und an die Maschinensteuerung übermittelt wird.

## Claims

1. Prechamber spark plug (1) suitable for use in a combustion chamber (12) of an internal combustion engine, comprising a prechamber (2) which is fluidically connected to the combustion chamber (12) by means of at least one opening (3) during normal use, wherein an ignition device having at least one central electrode (4) is arranged in the prechamber (2) and is suitable for igniting an ignitable mixture, wherein further a first pressure sensor (6) is arranged in the prechamber (2) in order to measure a pressure curve in the prechamber (2), **characterised in that** the prechamber spark plug (1) has a second pressure sensor (9) which is arranged for measuring a pressure curve in the combustion chamber (12).

2. Prechamber spark plug (1) according to claim 1, **characterised in that** the prechamber (2) or a part of the prechamber (2) is connected to the prechamber spark plug (1) via at least one form-fitting, force-fitting and/or at least one materially bonded connection and is preferably screwed, pressed on with bonding, pressed in, welded on and/or connected via at least one snap connection.

3. Prechamber spark plug (1) according to claim 1 or 2, **characterised in that** the prechamber spark plug (1) has an active heating device (20) which comprises at least one, preferably electrically operable, heating element (21), and **in that** the heating element is preferably arranged in the prechamber (2).

4. Prechamber spark plug (1) according to one of claims 1 to 3, **characterised in that** the prechamber spark plug (1) comprises a temperature sensor (17) in the prechamber (2), wherein the temperature sensor (17) is preferably optical and/or is preferably directed towards a prechamber cap (22) of the prechamber (2).

5. Prechamber spark plug (1) according to one of claims 1 to 4, **characterised in that** the prechamber spark plug (1) has at least one supply channel (18) for combustion gas into the prechamber (2).

6. Prechamber spark plug (1) according to claim 5, **characterised in that** the supply channel (18) and the temperature sensor (17) are arranged on opposite sides of the prechamber spark plug (1) in a section transverse to a longitudinal axis (A) of the prechamber spark plug (1).

7. Prechamber spark plug (1) according to one of claims 1 to 6, **characterised in that** the first pressure sensor (6) is further away from the prechamber (2) along a longitudinal axis (A) of the prechamber spark plug (1) than at least one central electrode (4) of the prechamber spark plug (1).

8. Prechamber spark plug (1) according to one of claims 1 to 7, **characterised in that** the first pressure sensor (6) is arranged in a recess (5) of the prechamber spark plug (1), which is in flow connection with the prechamber (2).

9. Prechamber spark plug (1) according to claim 8, **characterised in that** the recess (5) is of elongated design and is parallel to the longitudinal axis (A) or at an angle of at least 30°, preferably between 35° and 60°, to the longitudinal axis (A).

10. Prechamber spark plug (1) according to one of claims 1 to 9, **characterised in that** the first pressure sensor (6) and/or the second pressure sensor (9) is inclined with respect to a longitudinal axis (A) of the prechamber spark plug (1).

11. Prechamber spark plug (1) according to one of claims 1 to 10, **characterised in that** the first pressure sensor (6) and the second pressure sensor (9) are arranged on opposite sides of the prechamber spark plug (1) in a section transverse to a longitudinal axis (A) of the prechamber spark plug (1).

12. Prechamber spark plug (1) according to one of claims 1 to 11, **characterised in that** at least the first pressure sensor (6) and/or the second pressure sensor (9) is a piezoelectric, piezoresistive, capacitive or optical pressure sensor.

13. Method for operating an internal combustion engine, wherein the pressure in a prechamber (2) of a prechamber spark plug (1) arranged in a combustion chamber (12) is measured by a first pressure sensor (6) of the prechamber spark plug (1) and transmitted to an engine controller, and the engine controller controls the internal combustion engine on the basis of the pressure data obtained from the first pressure sensor (6), **characterised in that** the pressure in the combustion chamber (12) is measured by a second pressure sensor (9) of the prechamber spark plug (1), is transmitted to the engine controller, and the engine controller controls the internal combustion engine on the basis of the pressure data obtained from the second pressure sensor (9).

14. Method according to claim 13, **characterised in that** the temperature in the prechamber is measured by a temperature sensor (17) of the prechamber spark plug (1) and is transmitted to the engine controller.

## Revendications

1. Bougie d'allumage à préchambre (1) pour une application à une chambre de combustion (12) d'un moteur à combustion interne comprenant une préchambre (2) qui, pour une utilisation appropriée, est en liaison fluidique avec la chambre de combustion (12) par au moins une ouverture (3),
la préchambre (2) comportant une installation d'allumage avec au moins une électrode centrale (4) qui permet d'allumer un mélange combustible, et en outre un premier capteur de pression (6) est prévu dans la préchambre (2) pour mesurer l'évolution de la pression dans la préchambre (2),
bougie d'allumage à préchambre (1) **caractérisée par** un second capteur de pression (9) pour mesurer une évolution de pression dans la chambre de combustion (12).

2. Bougie d'allumage à préchambre (1) selon la revendication 1, **caractérisée en ce que**
la préchambre (2) ou une partie de la préchambre (2) est reliée à la bougie d'allumage à préchambre (1) par au moins une liaison par la forme, une liaison par la force et/ou au moins une liaison par la matière et, de préférence, elle est vissée, collée, emmanchée de force, pressée, soudée et/ou reliée par au moins une liaison par enclipsage.

3. Bougie d'allumage à préchambre (1) selon la revendication 1 ou 2, **caractérisée en ce que**
la bougie d'allumage à préchambre (1) comporte une installation de chauffage (20), active, qui comprend au moins un élément chauffant (21), de préférence à fonctionnement électrique, et
l'élément de chauffage est de préférence dans la préchambre (2).

4. Bougie d'allumage à préchambre (1) selon l'une des revendications 1 à 3,
**caractérisée en ce que**
la bougie d'allumage à préchambre (1) comprend un capteur de température (17) dans la préchambre (2), ce capteur de température (17) étant, de préférence optique et/ou orienté de préférence vers un capot (22) de préchambre (2).

5. Bougie d'allumage à préchambre (1) selon l'une des revendications 1 à 4,
**caractérisée en ce que**
la bougie d'allumage à préchambre (1) comporte au moins un canal d'alimentation (18) en gaz combustible dans la préchambre (2).

6. Bougie d'allumage à préchambre (1) selon la revendication 5,
**caractérisée en ce que**
le canal d'alimentation (18) et le capteur de température (17) selon une coupe transversale par rapport à l'axe longitudinal (A) de la bougie d'allumage à préchambre (1) sont sur les côtés opposés de la bougie d'allumage à préchambre (1).

7. Bougie d'allumage à préchambre (1) selon l'une des revendications 1 à 6,
**caractérisée en ce que**
le premier capteur de pression (6) est éloigné selon l'axe longitudinal (A) de la bougie d'allumage à préchambre (1) plus loin de la préchambre (2) qu'au moins une électrode centrale (4) de la bougie d'allumage à préchambre (1).

8. Bougie d'allumage à préchambre (1) selon l'une des revendications 1 à 7,
**caractérisée en ce que**
le premier capteur de pression (6) est dans un évidement (5) de la bougie d'allumage à préchambre (1), et qui communique avec la préchambre (2) par une liaison de passage de flux.

9. Bougie d'allumage à préchambre (1) selon la revendication 8,
**caractérisée en ce que**
l'évidement (5) est allongé parallèlement à l'axe longitudinal (A) ou faisant un angle d'au moins 30°, de préférence compris entre 35° et 60° par rapport à l'axe longitudinal (A).

10. Bougie d'allumage à préchambre (1) selon l'une des revendications 1 à 9,
**caractérisée en ce que**
le premier capteur de pression (6) et/ou le second capteur de pression (9) sont inclinés par rapport à l'axe longitudinal (A) de la bougie d'allumage à préchambre (1).

11. Bougie d'allumage à préchambre (1) selon l'une des revendications 1 à 10,
**caractérisée en ce que**
le premier capteur de pression (6) et le second capteur de pression (9) sont prévus sur les côtés opposés de la bougie d'allumage à préchambre (1), selon une coupe transversale à l'axe longitudinal (A) de la bougie d'allumage à préchambre (1).

12. Bougie d'allumage à préchambre (1) selon l'une des revendications 1 à 11,
**caractérisée en ce que**
au moins le premier capteur de pression (6) et/ou le second capteur de pression (9) est un capteur de pression piézoélectrique, piézo-résistant, capacitif ou optique.

13. Procédé de gestion d'un moteur à combustion interne, selon lequel on mesure la pression dans une préchambre (2) d'une bougie d'allumage à préchambre (1) installée dans la chambre de combustion (12) avec un premier capteur de pression (6) de la bougie d'allumage à préchambre (1) et on la transmet à une commande de machine et sur le fondement des données de pression reçues du premier capteur de pression (6) la machine de commande commande le moteur à combustion interne,
procédé **caractérisé en ce que**
on mesure la pression dans la chambre de combustion (12) avec un second capteur de pression (9) dans la bougie d'allumage à préchambre (1), on transmet la pression à la commande de machine et la commande de machine commande le moteur à combustion interne en se fondant sur les données de pression reçues du second capteur de pression (9).

14. Procédé selon la revendication 13,
**caractérisé en ce que**
on mesure la température dans la préchambre avec un capteur de température (17) de la bougie d'allumage à préchambre (1) et on transmet la pression à la commande de machine.
